# EUROPEAN PATENT SPECIFICATION

(11) **EP 2 273 886 B1**
(45) Date of publication and mention of the grant of the patent: **26.05.2021**
(21) Application number: 09726735.5
(22) Date of filing: 31.03.2009
(51) Int. Cl.: A21B 3/15, A21C 9/08

(54) **FLAT PRODUCT CARRIER FOR DOUGH PRODUCTS**
FLACHER PRODUKTTRÄGER FÜR TEIGPRODUKTE
SUPPORT DE PRODUIT PLAT POUR PRODUITS A BASE DE PATE

(30) Priority: 01.04.2008 NL 2001424
(43) Date of publication of application: 19.01.2011
(73) Proprietor: Kaak Groep B.V., 7061 GA Terborg (NL)
(72) Inventor: BROEKHOF, Martinus Antonius Joseph, 7011 AC Gaanderen (NL); STOLTE, Sijbren, 7095 BC De Heurne (NL)
(74) Representative: Peters, Sebastian Martinus
(86) International application number: PCT/NL2009/050164
(87) International publication number: WO 2009/123451

(56) References cited:
- EP-A- 1 932 459
- WO-A-2006/064999
- WO-A1-2009/123451
- FR-A- 2 313 897
- FR-A- 2 889 933
- GB-A- 901 669
- JP-U- 59 157 646
- US-A- 1 712 211
- US-A- 2 181 666
- US-A- 3 654 979
- US-A- 3 807 057
- US-A- 5 366 208
- US-A- 5 865 105
- US-A1- 2005 205 572
- US-A1- 2006 101 959
- US-A1- 2007 108 686

## Description

### BACKGROUND OF THE INVENTION

The invention relates to a flat product carrier for dough products, wherein the dough products can be slid from the product carrier. Such flat product carriers are also referred to by the English term "peelboard" .

Apart from the known baker's shovel or peel in bakeries, in the industrial bakeries flat product carriers are used that comprise a rectangular circumferential frame in which a flat plate has been placed. Said plate is usually made of a synthetic material and optionally provided with a surface texture.

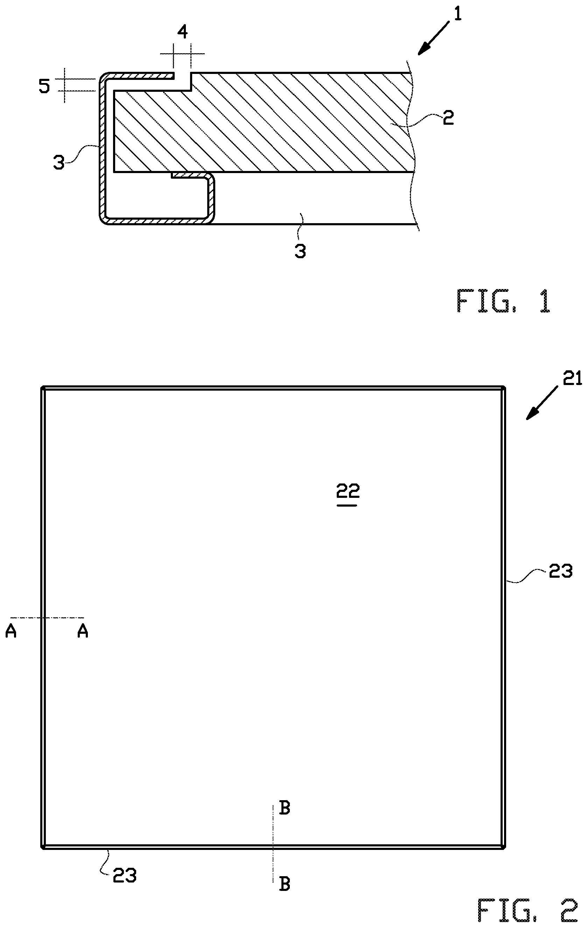

The known product carrier substantially acquires its firmness due to the circumferential frame made of steel, particularly stainless steel. A known device is shown in figure 1. In this cross-section of an edge area of a known product carrier 1, it is shown that the plate 2 is engaged all round by the stainless steel frame 3. The frame 3 is proportioned such that the plate 2 is placed in the frame 3 with some play. For instance a gap 4 has been arranged between the plate 2 and the frame 3 in order to absorb differences in the coefficient of expansion of the stainless steel frame 3 and the synthetic plate 2. Furthermore a gap 5 between the plate 2 and the frame 3 is necessary for assembly of the product carrier 1. US1712211 A and US3807057 A disclose product carriers for dough products for use in a proofing cabinet according to the state of the art.

A drawback of the known product carrier 1 is that contamination may arise due to grinding and/or brushing the plate 2, wherein waste products may end up in the gaps 4, 5, wherein the gaps are hard to clean.

It is an object of the invention to provide a product carrier wherein less, preferably no contamination occurs when brushing the plate.

### SUMMARY OF THE INVENTION

The invention is defined by a product carrier according to claim 1 and a product carrier according to claim 2. According to the invention the product carrier for dough comprises among others a substantially flat carrier plate having an upper side for carrying dough products thereon and a frame surrounding the carrier plate, wherein an outer edge of the frame projects beyond an outer edge of the carrier plate, characterised in that an upper side of the carrier plate projects at a distance above an upper side of the frame, wherein the upper side of the frame comprises an edge extending to within the perimeter of the carrier plate.

The product carrier according to the invention can now be brushed at the upper side, wherein substantially only the carrier plate is brushed. Because the frame comprises an edge extending to within the perimeter of the carrier plate, waste which due to brushing is pushed over the edge of the carrier plate falls on the edge of the frame and not directly into a gap between the frame and the carrier plate. In that way contamination of the product carrier can at least be reduced in comparison with the known product carriers.

In one embodiment the carrier plate and the frame are substantially rectangular and attached one to the other by means of connecting elements, wherein the connecting elements are placed in or near the corners of the rectangular frame, wherein the connecting elements are placed within the frame or the outer edge thereof.

In one embodiment the carrier plate and the frame are made of different materials, and the connecting elements are adapted for allowing a displacement between the carrier plate and the frame in a plane that is substantially parallel to the upper side of the frame. In one embodiment the carrier plate is made of synthetic material, and the frame is made of metal such as stainless steel.

In one embodiment the connecting elements are substantially placed on a bisector of the corner in question, wherein the attachment between the carrier plate and the frame preferably is displaceable in a direction that is substantially parallel to said bisector.

In the invention according to claim 2 the upper side of the frame extends substantially parallel to a lower side of the carrier plate that faces away from the upper side, wherein the edge of the upper side of the frame abuts the lower side of the carrier plate. In this case the carrier plate sits substantially on top of the frame and an optional gap between the carrier plate and the frame is situated near the lower side of the carrier plate, particularly situated near the circumferential edge of the carrier plate, which strongly reduces the risk of contamination.

In the invention according to claim 2 the carrier plate is connected to the frame by means of attachment means that engage onto the lower side of the carrier plate. In one embodiment the attachment means are adapted for making a displacement of an attachment point on the carrier plate with respect to the frame possible. As a result differences in the coefficient of expansion of the carrier plate and the frame can be absorbed.

In the invention according to claim 1 the edge of the upper side of the frame is inserted in a groove in a circumferential side of the carrier plate. In this case the carrier plate is substantially confined by the frame, particularly the edge of the upper side of the frame, and an optional gap between the carrier plate and the frame is situated in the circumferential edge of the carrier plate, as a result of which the risk of contamination is reduced. A further advantage of this embodiment is that no extra attachment means are necessary for connecting the carrier plate and the frame one to the other.

In one embodiment the upper side of the frame, particularly the edge of the upper side of the frame facing the carrier plate, extends substantially parallel to the groove in the circumferential side of the carrier plate. In one embodiment the edge of the upper side of the frame is substantially snugly placed in the groove. As a result it can be further prevented that waste may end up in the groove.

In one embodiment an end of the edge of the upper side of the frame, which end is placed in the groove, is spaced apart from an end wall of the groove. In this way differences in the coefficient of expansion of the frame and the carrier plate can be absorbed, without this leading to mechanical tensions in the product carrier.

According to the invention the frame extends underneath the bottom wall of the carrier plate. In that way the frame may serve as support for the product carrier.

According to a second aspect the invention provides a dough processing device, particularly a proofing cabinet, comprising one or more product carriers as described above.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows a view in schematic cross-section of a known product carrier;
Figure 2 shows a schematic top view of a first exemplary embodiment of a device according to the invention;
Figure 3 shows a schematic cross-section of figure 2, along the line A-A and B-B;
Figure 4 shows a schematic bottom view of a second exemplary embodiment of a device according to the invention;
Figure 5 shows a detail of the schematic bottom view of figure 4;
Figure 6 shows a schematic cross-section of figure 5, along the line C-C;
Figure 7 shows a schematic cross-section of figure 5, along the line D-D;
Figure 8 shows a schematic bottom view of a third exemplary embodiment of a device according to the invention; and
Figure 9 shows a schematic cross-section of figure 8, along the line E-E.

### DETAILED DESCRIPTION OF THE DRAWINGS

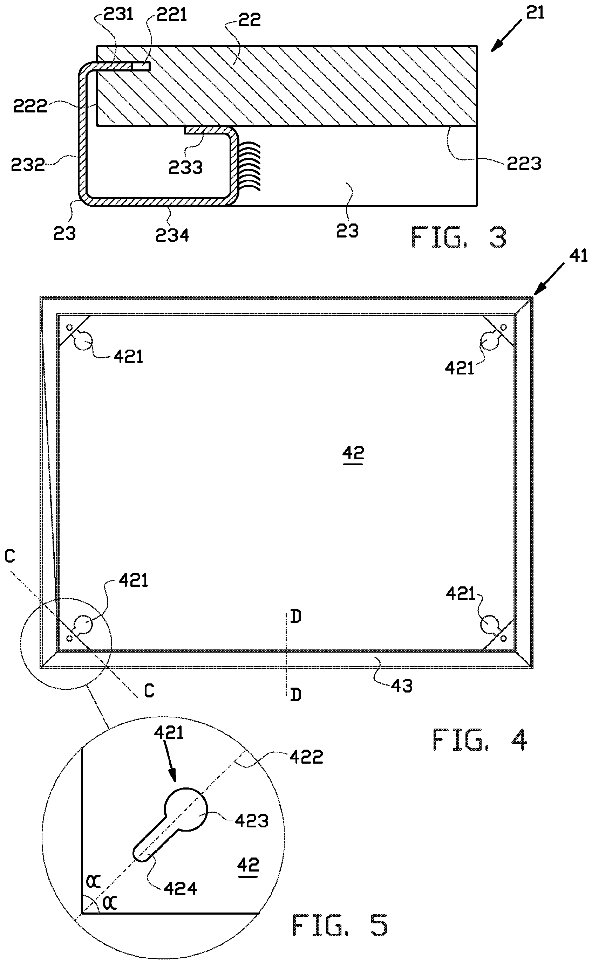

A first exemplary embodiment of a product carrier 21 according to the invention is shown in figures 2 and 3. Figure 2 shows a top view of the product carrier 21, having a carrier plate 22 and a frame 23 surrounding the carrier plate 22.

As shown in the view in cross-section of figure 3, the carrier plate 22 at a circumferential wall thereof is provided with a groove 221 extending substantially parallel to the upper side of the carrier plate 22.

At its upper side the frame 23 is provided with an edge 231 extending to within the perimeter of the carrier plate 22, particularly to within the groove 221. The edge 231 does not fully fill the groove 221 so that room is left for expansion of the edge 231 with respect to the carrier plate 22.

It is furthermore clear from figure 3 that an outer edge 232 of the frame 23 extends beyond an outer edge 222 of the carrier plate 22. As a result the circumferential edge of the carrier plate 22 can be protected by the frame 23.

The frame 23 extends underneath the bottom wall 223 of the carrier plate 22, and is provided with a flanged edge 233 that abuts the bottom wall 223 of the carrier plate 22. The lower side 234 of the frame 23 thus forms a foot for the product carrier 21, suitable for supporting the product carrier 21.

A second exemplary embodiment of a product carrier 51 according to the invention is shown in figures 4, 5, 6 and 7. Figure 4 shows a bottom view of the product carrier 41, having a carrier plate 42 and a frame 43 surrounding the carrier plate 42.

As shown in figure 4, and in more detail in figure 5, the carrier plate 42 at its lower side is provided with slotted holes 421 which are placed near the corners of the carrier plate 42. A longitudinal axis 422 of the slotted holes 421 is placed at an angle a which divides the corner of the carrier plate 42 into two substantially equal parts.

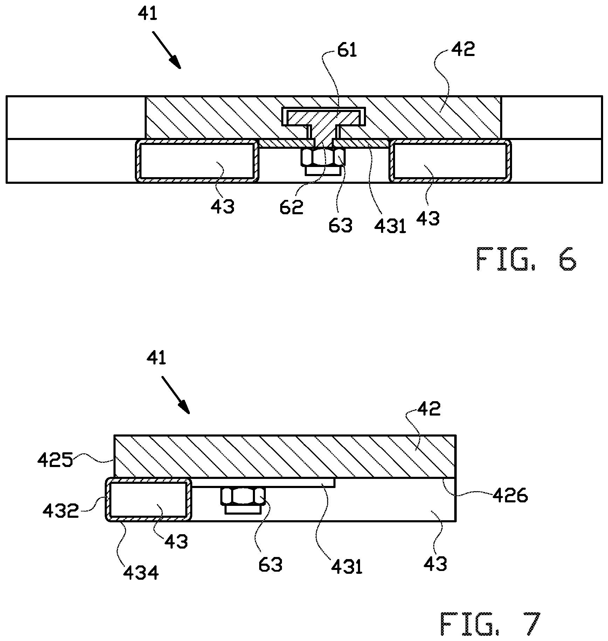

Each of the slotted holes 421 comprises a first opening 423 for arranging therein an attachment device 61 provided with a head (see figure 6), and a second part 424 which has a narrower opening so that the head of the attachment device 61 is confined here within the slot 421.

As shown in the view in cross-section of figure 6, the attachment device 61 is furthermore provided with a pin 62 having a smaller diameter than the head. The pin 62 is able to extend through the narrower opening of the second part 424, and through an opening in an attachment part 431 of the frame 43 which part is placed near the slotted holes 421. At its end the pin is provided with external thread. By placing a nut 63 over said thread, the plate 42 is attached to the frame 43. Due to said attachment by means of an attachment device 61 placed in the slotted holes 421, a difference in expansion due to temperature changes between the frame 43 and the carrier plate 42 can be absorbed.

It is furthermore clear from figure 7 that an outer edge 432 of the frame 43 projects beyond an outer edge 425 of the carrier plate 42. In that way the circumferential edge of the carrier plate 42 can be protected by the frame 43.

The frame 43 is placed substantially underneath the bottom wall 426 of the carrier plate 42, and is provided with a substantially circumferential tube 43 that abuts the bottom wall 426 of the carrier plate 42. The lower side 434 of the frame 43 thus forms a foot for the product carrier 41, suitable for supporting the product carrier 41.

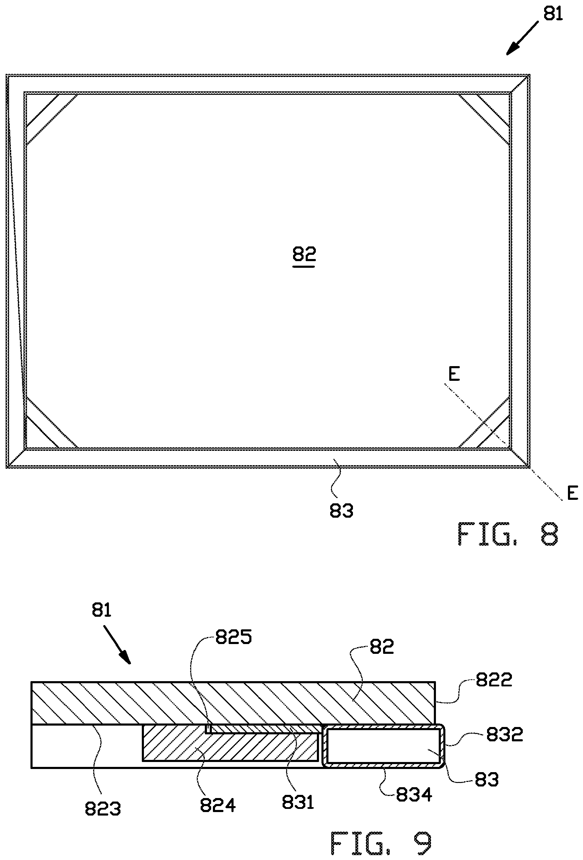

A third exemplary embodiment of a product carrier 81 according to the invention is shown in figures 8 and 9. Figure 8 shows a bottom view of the product carrier 81, having a carrier plate 82 and a frame 83 surrounding the carrier plate 82.

As shown in the view in cross-section of figure 9, the carrier plate 82 is placed on top of the frame 83.

At its upper side the frame 83 is provided with an edge 831 extending to within the perimeter of the carrier plate 82. The edge 831 is placed particularly in the corners of the frame 83. In that case said edges 831 that fill the corners may also provide the corners of the frame 83 with additional firmness.

It is furthermore clear from figure 9 that an outer edge 832 of the frame 83 projects beyond an outer edge 822 of the carrier plate 82. In that way the circumferential edge of the carrier plate 82 can be protected by the frame 83.

The frame 83 is placed underneath the bottom wall 823 of the carrier plate 82, and at least the edge 831 abuts said bottom wall 823. The carrier plate 82 is provided with a retaining block 824 that is connected to the bottom wall 823, for instance by means of a glue connection. Between the retaining block 824 and the bottom wall 823, slot 825 is formed extending substantially parallel to the bottom wall 823 of the carrier plate 82.

At its upper side the frame 83 is provided with an edge 831 extending to within the perimeter of the carrier plate 82, particularly to within the slot 825. The edge 831 in that case does not fully fill the slot 825, so that room is left for expansion of the frame 83 including the edge 831 with respect to the carrier plate 82.

The lower side 834 of the frame 83 thus forms a foot for the product carrier 81, suitable for supporting the product carrier 81.

In a further exemplary embodiment the carrier plate 22, 42, 82 can be made of a polypropylene (PP) foamed material.

The above description is included to illustrate the operation of preferred embodiments of the invention and not to limit the scope of the invention.

## Claims

1. Product carrier (21) for dough products for use in a proofing cabinet, comprising
a flat carrier plate (22) having an upper side for carrying dough products thereon, and
a frame (23) surrounding the carrier plate, wherein an outer edge (232) of the frame projects beyond an outer circumferential edge (222) of the carrier plate,
wherein
the upper side of the carrier plate projects at a distance above an upper side of the frame, wherein the upper side of the frame comprises an edge (231) extending to within the perimeter of the carrier plate (22),
wherein the edge (231,) of the upper side of the frame is inserted in a groove (221) in a circumferential side of the carrier plate, and
wherein the frame (23) extends at least partially underneath the bottom wall (223) of the carrier plate (22).

2. Product carrier (41, 81) for dough products for use in a proofing cabinet, comprising
a flat carrier plate (42, 82) having an upper side for carrying dough products thereon, and
a frame (43, 83) surrounding the carrier plate, wherein an outer edge (432, 832) of the frame projects beyond an outer circumferential edge (425, 822) of the carrier plate,
wherein
the upper side of the carrier plate projects at a distance above an upper side of the frame, wherein the upper side of the frame comprises an edge (431, 831) extending to within the perimeter of the carrier plate (41, 81),
wherein the upper side of the frame (43, 83) extends substantially parallel to a lower side (426, 823) of the carrier plate (42, 82) that faces away from the upper side, wherein the edge (431, 831) of the upper side of the frame abuts a bottom wall (426, 823) of the carrier plate,
wherein the frame (43, 83) is placed underneath the bottom wall (426, 823) of the carrier plate (42, 82), and
wherein the carrier plate (42, 82) is connected to the frame (43, 83) by means of attachment means (61, 824) that engage onto the lower side of the carrier plate.

3. Product carrier according to claim 1 or 2, wherein the carrier plate (22, 42, 82) and the frame (23, 43, 83) are substantially rectangular and attached one to the other by means of connecting elements (231, 61, 824), wherein the connecting elements are placed in or near the corners of the rectangular frame, wherein the connecting elements are placed within the frame or the outer edge thereof.

4. Product carrier according to claim 3, wherein the carrier plate (22, 42, 82) is placed on the frame (23, 43, 83).

5. Product carrier according to claim 3 or 4, wherein the carrier plate (22, 42, 82) and the frame (23, 43, 83) are made of different materials, and wherein the connecting elements are adapted for allowing a displacement between the carrier plate and the frame in a plane that is substantially parallel to the upper side of the frame.

6. Product carrier according to claim 5, when dependent on claim 2, wherein the connecting elements (61, 824) are substantially placed on a bisector (422) of the corner in question, and wherein the attachment (61) between the carrier plate and the frame is displaceable in a direction that is substantially parallel to said bisector.

7. Product carrier according to claim 5 or 6, wherein the carrier plate (22, 42, 82) is made of synthetic material, and the frame (23, 43, 83) is made of metal such as stainless steel.

8. Product carrier according to any one of the preceding claims, when dependent on claim 1, wherein the upper side of the frame (23) extends substantially parallel to the groove (221) in the circumferential side of the carrier plate (22).

9. Product carrier according to any one of the preceding claims, when dependent on claim 1, wherein the edge (231) of the upper side of the frame (23) is substantially snugly placed in the groove (221).

10. Product carrier according to any one of the preceding claims, when dependent on claim 1, wherein an end of the edge (231) of the upper side of the frame (23), which end is placed in the groove (221), is spaced apart from an end wall of the groove (221).

11. Product carrier according to any one of the preceding claims, wherein the plate is provided with a surface texture.

12. Dough processing device, particularly a proofing cabinet, comprising one or more product carriers (21, 41, 81) according to any one of the preceding claims.

## Patentansprüche

1. Produktträger (21) für Teigprodukte zur Verwendung in einem Gärraum, der folgende Merkmale aufweist:
eine flache Trägerplatte (22), die eine Oberseite zum Tragen von Teigprodukten auf derselben aufweist, und
einen die Trägerplatte umgebenden Rahmen (23), wobei ein Außenrand (232) des Rahmens über einen Außenumfangsrand (222) der Trägerplatte vorspringt,
wobei die Oberseite der Trägerplatte in einem Abstand über einer Oberseite des Rahmens vorspringt, wobei die Oberseite des Rahmens einen Rand (231) aufweist, der sich bis innerhalb der äußeren Begrenzung der Trägerplatte (22) erstreckt,
wobei der Rand (231) der Oberseite des Rahmens in eine in einer Umfangsseite der Trägerplatte befindliche Rille (221) eingefügt ist und
wobei sich der Rahmen (23) zumindest teilweise unter der unteren Wand (223) der Trägerplatte (22) erstreckt.

2. Produktträger (41, 81) für Teigprodukte zur Verwendung in einem Gärraum, der folgende Merkmale aufweist:
eine flache Trägerplatte (42, 82), die eine Oberseite zum Tragen von Teigprodukten auf derselben aufweist, und
einen die Trägerplatte umgebenden Rahmen (43, 83), wobei ein Außenrand (432, 832) des Rahmens über einen Außenumfangsrand (425, 822) der Trägerplatte vorspringt,
wobei die Oberseite der Trägerplatte in einem Abstand über einer Oberseite des Rahmens vorspringt, wobei die Oberseite des Rahmens einen Rand (431, 831) aufweist, der sich bis innerhalb der äußeren Begrenzung der Trägerplatte (41, 81) erstreckt,
wobei sich die Oberseite des Rahmens (43, 83) im Wesentlichen parallel zu einer Unterseite (426, 823) der Trägerplatte (42, 82), die der Oberseite abgewandt ist, erstreckt, wobei der Rand (431, 831) der Oberseite des Rahmens an eine untere Wand (426, 823) der Trägerplatte anstößt,
wobei der Rahmen (43, 83) unter der unteren Wand (426, 823) der Trägerplatte (42, 82) platziert ist und
wobei die Trägerplatte (42, 82) mittels Befestigungseinrichtungen (61, 824), die in die Unterseite der Trägerplatte eingreifen, mit dem Rahmen (43, 83) verbunden ist.

3. Produktträger gemäß Anspruch 1 oder 2, bei dem die Trägerplatte (22, 42, 82) und der Rahmen (23, 43, 83) im Wesentlichen rechteckig sind und mittels Verbindungselementen (231, 61, 824) aneinander befestigt sind, wobei die Verbindungselemente in den oder in der Nähe der Ecken des rechteckigen Rahmens platziert sind, wobei die Verbindungselemente in dem Rahmen oder dem Außenrand desselben platziert sind.

4. Produktträger gemäß Anspruch 3, bei dem die Trägerplatte (22, 42, 82) an dem Rahmen (23, 43, 83) platziert ist.

5. Produktträger gemäß Anspruch 3 oder 4, bei dem die Trägerplatte (22, 42, 82) und der Rahmen (23, 43, 83) aus unterschiedlichen Materialien hergestellt sind und bei dem die Verbindungselemente dazu angepasst sind, eine Verschiebung zwischen der Trägerplatte und dem Rahmen in einer Ebene, die im Wesentlichen parallel zu der Oberseite des Rahmens ist, zu ermöglichen.

6. Produktträger gemäß Anspruch 5 in Rückbezug auf Anspruch 2, bei dem die Verbindungselemente (61, 824) im Wesentlichen auf einer Halbierungslinie (422) der betreffenden Ecke platziert sind und bei dem die Befestigung (61) zwischen der Trägerplatte und dem Rahmen in einer Richtung verschiebbar ist, die im Wesentlichen parallel zu der Halbierungslinie ist.

7. Produktträger gemäß Anspruch 5 oder 6, bei dem die Trägerplatte (22, 42, 82) aus synthetischem Material hergestellt ist und der Rahmen (23, 43, 83) aus Metall wie z. B. Edelstahl hergestellt ist.

8. Produktträger gemäß einem der vorhergehenden Ansprüche in Rückbezug auf Anspruch 1, bei dem sich die Oberseite des Rahmens (23) im Wesentlichen parallel zu der in der Umfangsseite der Trägerplatte (22) befindlichen Rille (221) erstreckt.

9. Produktträger gemäß einem der vorhergehenden Ansprüche in Rückbezug auf Anspruch 1, bei dem der Rand (231) der Oberseite des Rahmens (23) im Wesentlichen enganliegend in der Rille (221) platziert ist.

10. Produktträger gemäß einem der vorhergehenden Ansprüche in Rückbezug auf Anspruch 1, bei dem ein Ende des Randes (231) der Oberseite des Rahmens (23), das in der Rille (221) platziert ist, von einer Endwand der Rille (221) beabstandet ist.

11. Produktträger gemäß einem der vorhergehenden Ansprüche, bei dem die Platte mit einer Oberflächentextur versehen ist.

12. Teigverarbeitungsvorrichtung, insbesondere ein Gärraum, der einen oder mehrere Produktträger (21, 41, 81) gemäß einem der vorhergehenden Ansprüche aufweist.

## Revendications

1. Support de produit (21) pour des produits à base de pâte pour son utilisation dans une armoire de fermentation, comprenant
une plaque de support (22) plate ayant un côté supérieur pour supporter des produits à base de pâte sur celle-ci, et
un cadre (23) entourant la plaque de support, dans lequel un bord extérieur (232) du cadre fait saillie au-delà d'un bord circonférentiel extérieur (222) de la plaque de support,
dans lequel le côté supérieur de la plaque de support fait saillie à une distance au-dessus d'un côté supérieur du cadre, dans lequel le côté supérieur du cadre comprend un bord (231) s'étendant jusque dans le périmètre de la plaque de support (22),
dans lequel le bord (231) du côté supérieur du cadre est inséré dans une rainure (221) dans un côté circonférentiel de la plaque de support, et
dans lequel le cadre (23) s'étend au moins partiellement en dessous de la paroi de dessous (223) de la plaque de support (22) .

2. Support de produit (41, 81) pour des produits à base de pâte pour son utilisation dans une armoire de fermentation, comprenant
une plaque de support (42, 82) plate ayant un côté supérieur pour supporter des produits à base de pâte sur celle-ci, et
un cadre (43, 83) entourant la plaque de support, dans lequel un bord extérieur (432, 832) du cadre fait saillie au-delà d'un bord circonférentiel extérieur (425, 822) de la plaque de support,
dans lequel le côté supérieur de la plaque de support fait saillie à une distance au-dessus d'un côté supérieur du cadre, dans lequel le côté supérieur du cadre comprend un bord (431, 831) s'étendant jusque dans le périmètre de la plaque de support (41, 81),
dans lequel le côté supérieur du cadre (43, 83) s'étend sensiblement parallèle à un côté inférieur (426, 823) de la plaque de support (42, 82) qui fait face à distance du côté supérieur, dans lequel le bord (431, 831) du côté supérieur du cadre vient buter contre une paroi de dessous (426, 823) de la plaque de support,
dans lequel le cadre (43, 83) est placé en dessous de la paroi de dessous (426, 823) de la plaque de support (42, 82), et
dans lequel la plaque de support (42, 82) est reliée au cadre (43, 83) au moyen de moyens de fixation (61, 824) qui viennent en prise sur le côté inférieur de la plaque de support.

3. Support de produit selon la revendication 1 ou 2, dans lequel la plaque de support (22, 42, 82) et le cadre (23, 43, 83) sont sensiblement rectangulaires et fixés l'un à l'autre au moyen d'éléments de liaison (231, 61, 824), dans lequel les éléments de liaison sont placés dans ou près des angles du cadre rectangulaire, dans lequel les éléments de liaison sont placés dans le cadre ou le bord extérieur de celui-ci.

4. Support de produit selon la revendication 3, dans lequel la plaque de support (22, 42, 82) est placée sur le cadre (23, 43, 83).

5. Support de produit selon la revendication 3 ou 4, dans lequel la plaque de support (22, 42, 82) et le cadre (23, 43, 83) sont faits de matières différentes, et dans lequel les éléments de liaison sont adaptés pour permettre un déplacement entre la plaque de support et le cadre dans un plan qui est sensiblement parallèle au côté supérieur du cadre.

6. Support de produit selon la revendication 5, lorsqu'elle dépend de la revendication 2, dans lequel les éléments de liaison (61, 824) sont sensiblement placés sur une bissectrice (422) de l'angle en question, et dans lequel la fixation (61) entre la plaque de support et le cadre est déplaçable dans une direction qui est sensiblement parallèle à ladite bissectrice.

7. Support de produit selon la revendication 5 ou 6, dans lequel la plaque de support (22, 42, 82) est faite d'une matière synthétique, et le cadre (23, 43, 83) est fait de métal tel que de l'acier inoxydable.

8. Support de produit selon l'une quelconque des revendications précédentes, lorsqu'elle dépend de la revendication 1, dans lequel le côté supérieur du cadre (23) s'étend sensiblement parallèle à la rainure (221) dans le côté circonférentiel de la plaque de support (22).

9. Support de produit selon l'une quelconque des revendications précédentes, lorsqu'elle dépend de la revendication 1, dans lequel le bord (231) du côté supérieur du cadre (23) est placé sensiblement parfaitement dans la rainure (221).

10. Support de produit selon l'une quelconque des revendications précédentes, lorsqu'elle dépend de la revendication 1, dans lequel une extrémité du bord (231) du côté supérieur du cadre (23), laquelle extrémité est placée dans la rainure (221), est espacée d'une paroi d'extrémité de la rainure (221).

11. Support de produit selon l'une quelconque des revendications précédentes, dans lequel la plaque est pourvue d'une texture de surface.

12. Dispositif de traitement de pâte, en particulier une chambre de fermentation, comprenant un ou plusieurs supports de produit (21, 41, 81) selon l'une quelconque des revendications précédentes.
